# NEUE EUROPÄISCHE PATENTSCHRIFT

(11) **EP 0 408 929 B2**
(45) Veröffentlichungstag und Bekanntmachung des Hinweises auf die Entscheidung über den Einspruch: **29.10.1997**
(45) Hinweis auf die Patenterteilung: 23.12.1992
(21) Anmeldenummer: 90111947.9
(22) Anmeldetag: 23.06.1990
(51) Int. Cl.: B65D 1/02

(54) **Faltbare Kunststoff-Flasche**
Foldable plastic bottle
Bouteille pliable en plastique

(30) Priorität: 20.07.1989 CH 2750/89; 19.10.1989 CH 3797/89
(43) Veröffentlichungstag der Anmeldung: 23.01.1991
(73) Patentinhaber: DÜRING AG, CH-8108 Dällikon (CH)
(72) Erfinder: Düring, Walter, CH-8108 Dällikon (CH)
(74) Vertreter: Bosshard, Ernst

(56) Entgegenhaltungen:
- FR-A- 1 278 394
- FR-A- 1 385 639
- FR-A- 2 288 445
- FR-A- 2 316 132
- US-A- 3 395 836
- US-A- 3 727 803
- US-D-00 256 664

## Beschreibung

Die Erfindung bezieht sich auf eine im Blasverfahren hergestellte, faltbare Kunststoff-Flasche mit einem verschliessbaren Ausgussteil und einer am Boden und an Mantelflächen vorhandenen Falte zur Ermöglichung einer Volumenreduktion bei Ausübung eines auf die Wände von Hand ausgeübten Druckes.

Ferner bezieht sich die Erfindung auf ein Verfahren zur Volumenverminderung einer leeren derartigen Kunststoff-Flasche.

Zur Aufnahme von Flüssigkeiten und viskosen Produkten sind bereits zahlreiche Flaschenformen bekannt.

Es besteht indessen ein Bedarf an billigen, materialsparenden Flaschen, die im leeren Zustand nur wenig Platz einnehmen und sich auch als Nachfüll-Packung für Originalflaschen eignen.

Die FR-A-1385639 zeigt eine Faltflasche, welche vor dem Abfüllen ein geringes Transportvolumen hat. Die Boden- und Seitenfalten kanten sind nach innen gerichtet. Das Faltmuster erlaubt nur eine geringe Volumenverminderung im leeren Zustand und eignet sich zudem nicht zur Herstellung im Blasverfahren.

Aus dem FR-U-2288445 geht ein Fläschchen oder eine Ampulle hervor, mit einem Faltenbalg, der mehrere Falten aufweist zur Aufnahme von sehr kleinen Volumina. Durch pumpenartigen Druck auf die Seitenwände wird der Flascheninhalt herausgepresst oder zerstäubt. Dabei wird nicht eine flache Form des leeren Behälters angestrebt, sondern das für die Pumpwirkung wichtige, elastische Rückstellvermögen. Die einspringenden Bodenfaltkanten gehen in einspringende Seitenfaltkanten über.

Die US-A-3395836 zeigt eine runde Flasche mit einer im Längsschnitt V-artigen Einbuchtung die beidseits in Längsnuten übergeht, bei der durch Druck auf die Seitenwände eine Entnahme des Inhalts oder eine praktische Dispensierung unter pumpenartigen Bewegungen erfolgt. Entsprechend der Zweckbestimmung wird hier keine möglichst flache Flaschenform im leeren Zustand angestrebt, sondern eine Formgebung, die ein möglichst gutes, elastisches Rückstellvermögen erlaubt. Zudem wird das Fassungsvermögen einer solchen Flasche durch die keilförmig weit einwärts ragenden Seitenflächen vermindert.

Bei der Herstellung von Flaschen im besonders rationellen Blasverfahren aus einem heissen Kunststoff-Schlauch sind besondere, diesem Herstellungsverfahren inhärente Eigenheiten und Fabrikations-Beschränkungen zu beachten. So sind beispielsweise der Wandstärke bestimmte Grenzen gesetzt und die Verformung des heissen Schlauches in scharfe Ecken und eine starke Materialdehnung für Ausbuchtungen od.dgl. ist wegen Rissgefahr nicht möglich. Um eine gute Faltung zu ermöglichen, sollten zudem herstellungsbedingte Materialverdickungen nicht gerade an den Faltstellen auftreten.

Hinzu kommen noch die bei einer Faltung auftretenden Probleme mit Materialstauchung und Materialstreckung.

Die mit der Erfindung zu lösende Aufgabe besteht in der Schaffung einer im Blasverfahren in einem Arbeitsgang herstellbaren Kunststoff-Flasche, die im leeren Zustand auf geringe Dicke faltbar ist, mit einem geringen Materialbedarf auskommt, im gefüllten Zustand stehbar und im Vergleich zum Platzbedarf - beispielsweise in Verkaufsgestellen - ein möglichst grosses Fassungsvermögen hat.

Diese Aufgabe wird durch eine Flasche nach dem Anspruch 1 gelöst

Durch die Trennung der beiden Blasformhälften in einer Ebene, die quer verläuft zu einer Ebene, gebildet aus den Mantelfaltkanten und der mittigen Bodenfaltkante, wird erreicht, dass die vorgesehenen Faltkanten nur eine geringe, beim Faltvorgang leicht verformbare Materialstärke haben. Im Gegensatz hiezu würden sich bei einer konventionellen Trennebene der Blasformhälften, gebildet aus Bodenfaltkante und der Flaschenlängsachse bzw den Mantelfaltkanten, Nachteile ergeben. Als Folge des Blasverfahrens würden sich beim Schliessen der beiden Blasformhälften durch die Quetschkanten der Blasform am Boden Materialansammlungen an beiden Enden des flachgedrückten Schlauches bilden. Solche Materialansammlungen ergeben dann halbmondförmige, quer zur Quetschkante liegende Verdickungen, welche einen Faltvorgang stark erschweren würden.

Das erfindungsgemässe Verfahren ist dadurch gekennzeichnet, dass die Flasche durch Druck von Hand auf ihre Mantelfläche entlang von zwei sich in Flaschenlängsrichtung erstreckenden Mantelfaltlinien und entlang einer Bodenfaltlinie einer V-artigen, einwärtsragenden Einbuchtung gefaltet wird, wobei im ausgussnahen Bereich der Flasche die nahe übereinanderliegenden Wände angenähert die Form einer Halbschale annehmen und nach dem Faltvorgang zur Verhinderung einer elastischen Rückfederung des Flaschenmaterials der Ausgussteil luftdicht verschlossen wird.

Durch das erfindungsgemässe Verfahren lässt sich die leere Flasche auf ein geringes Volumen zusammenfalten. Dabei geht die zuvor an den Enden stark gewölbte Bodenfaltkante in eine gestrecktere Form über. Der Flaschenoberteil nimmt beim Faltvorgang die Form einer gewölbten Halbschale ein, wobei die beiden Flaschenwände nahe übereinander liegen. Durch das Verschliessen der Ausgussöffnung nach dem Faltvorgang wird verhindert, dass sich die Flasche wegen des flexiblen Flaschenmaterials zurückfedert und sich mit Luft füllen kann.

In der Zeichnung sind Ausführungsbeispiele des Erfindungsgegenstandes dargestellt. Es zeigen:
Fig. 1 eine perspektivische Darstellung einer ersten Ausführungsform der Flasche
Fig. 2 eine Draufsicht auf die Flasche gemäss Fig. 1
Fig. 3 eine Ansicht in Richtung auf den Flaschenboden der Flasche gemäss Fig. 1
Fig. 4 eine Seitenansicht der Flasche gemäss Fig. 1
Fig. 5 eine Frontansicht der Flasche gemäss Fig. 1
Fig. 6 einen Längsschnitt durch den Ausgussteil
Fig. 7 eine perspektivische Darstellung der leeren, zusammengefalteten Flasche gemäss Fig. 1
Fig. 8 eine perspektivische Darstellung einer zweiten Ausführungsform der Flasche
Fig. 9 eine Ansicht des Flaschenbodens gemäss Fig. 8
Fig. 10 eine Draufsicht auf die Flasche gemäss Fig. 8
Fig. 11 eine perspektivische Darstellung einer dritten Ausführungsform der Flasche
Fig. 12 eine Ansicht des Flaschenbodens gemäss Fig. 11
Fig. 13 eine Draufsicht auf die Flasche gemäss Fig. 11

Die Flasche besteht aus einem dünnwandigen, flexiblen, vorzugsweise transluzenten Kunststoff. Die Herstellung erfolgt im Blasverfahren aus einem heissen Kunststoff-Schlauch in einer zweiteiligen Blasform.

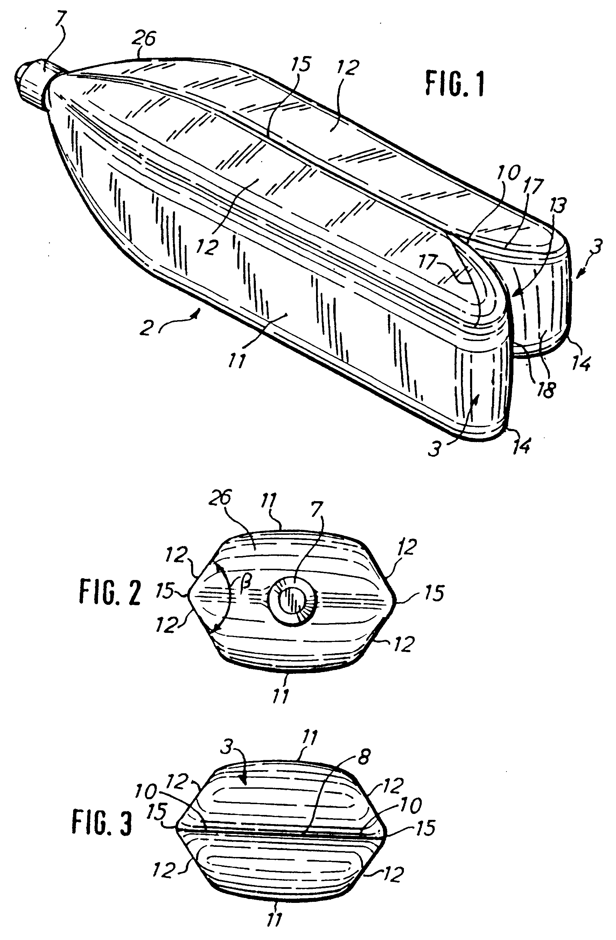

Die Flasche gemäss Fig. 1 hat eine längliche Form mit einem angenähert sechseckigen Querschnitt mit ungleichen Seitenlängen. Diese Querschnittsform ist bezüglich ihrer Längs und Querachse je spiegelsymmetrisch. Der Mantel 2 dieser Flasche enthält zwei sich gegenüberliegende, ebene oder leicht gewölbte Hauptflächen 11 und je zwei in einem Winkel β zueinander stehende Seitenflächen 12. Ferner ist ein Hals 16 mit einem Gewinde 5 vorhanden, auf das eine Verschlusskappe 7 aufschraubbar ist.

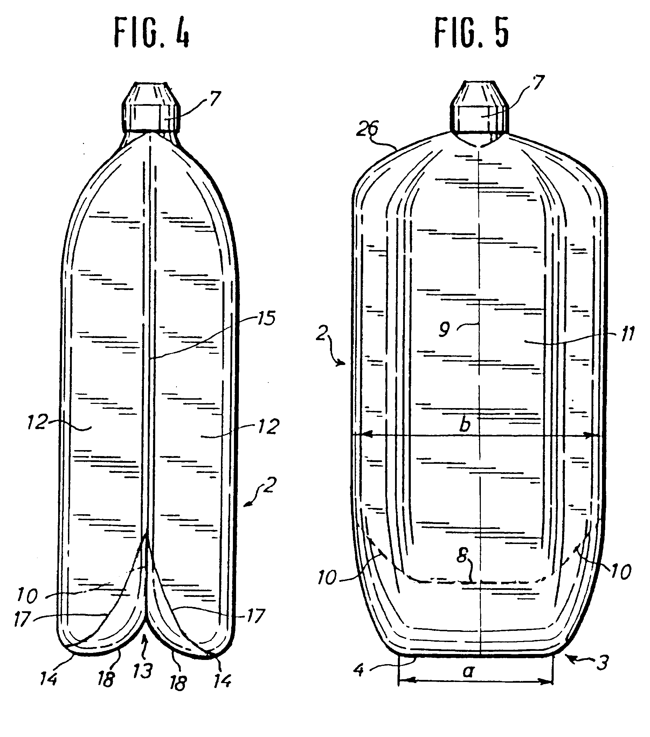

Der Bodenteil 3 enthält eine in Längsrichtung etwa V-artige, nach einwärts gerichtete Einbuchtung 13 mit zwei konvexen Wänden 18, die im Bereich einer Standfläche 4 Abrundungen 14 aufweisen und in die Seitenflächen 12 übergehen, wie dies aus Fig. 4 hervorgeht. Die Bodenfaltkante 8 am Grund der V-artigen Einbuchtung 13 verläuft in ihrem Mittelbereich geradlinig oder schwach bogenförmig und erstreckt sich anschliessend auf beiden Seiten als Bogen 10 gewölbt und wird somit jeweils fortgesetzt. Die beiden Bogen 10 gehen oben angenähert tangential in je eine Mantelfaltkante 15 über. Die Mantelfaltkanten 15 bilden je eine sich in Flaschenlängsrichtung erstreckende Mantellinie. Am Uebergang von den konvexen Wänden 18 zu den Seitenflächen 12 sind Rundungen 14 vorhanden, die bei der Faltung VerbindungsFaltkanten 17 bilden. Zusammen mit den Mantelfaltkanten 15 bilden die beiden Verbindungs-Faltkanten 17 eine auf dem Kopf stehende Y-Form. Die Bodenfaltkante 8 mit dem Bogen 10 und die Mantelfaltkanten 15 liegen in der gleichen Flaschen-Längsmittelebene. Die beiden Seitenflächen 12, welche vom Flaschenkörper ausgehend nach aussen ragen, bilden zusammen eine Ausbuchtung und schliessen miteinander einen Winkel β von 90-140° ein, vorzugsweise etwa 120°. Die Mantelfaltkanten 15 liegen auf den Graten der beiden sich gegenüberliegenden Ausbuchtungen. Die Standfläche 4 des Bodenteiles 3 mit der Länge a ist kürzer als der über die Mantelfaltkanten 15 gemessene Abstand b.

Der obere Teil des Flaschenkörpers ist bogenförmig ausgebildet und geht einstückig in den zylindrischen Hals 16 mit Ausgussteil 19 über, der koaxial zur Flaschenlängsachse verläuft. Das im Durchmesser verringerte, zylindrische Ausgussrohr 19 ist aussen offen. Der Hals 16 ist mit einem Gewinde 5 versehen, auf das die Verschlusskappe 7 aufgesetzt wird. Die Verschlussklappe 7 enthält aussen einen zylindrischen Teil 22, der innen ein Gewinde trägt und einen oben,-anschliessenden, konischen Teil 23 enthält, welcher in einen kreisrunden Deckel 24 übergeht. Von diesem Deckel 24 ragt innen ein Ringteil 21 in das Innere des Ausgussrohres 19 hinein und bewirkt nach dem Aufschrauben einen dichten Abschluss der Oeffnung des Ausgussrohres 19. Der Durchmesser d des Ausgussteiles 19 beträgt weniger als 1/4, vorzugsweise etwa 1/6 der grössten Flaschenausdehnung b quer zur Flaschenlängsachse.

Die beiden sich gegenüberliegenden Hauptflächen 11, welche entweder eben oder leicht nach aussen gewölbt sind, gehen im obersten Flaschenteil in eine Rundung 26 über, an die sich der Hals 16 anschliesst. Wie aus Fig. 4 hervorgeht, ist dieser oberste Teil des Flaschenkörpers - von der Seite gesehen - sattelförmig ausgebildet. Die im wesentlichen unverdickte Fuge 9, welche durch die Trennung der Blasformhälften entsteht, erstreckt sich in Flaschenlängsrichtung und verläuft am Bodenteil 3 quer zur Bodenfaltkante 8 und liegt je in der Mitte der beiden Hauptflachen 11. Somit ist diese Trennfuge der Blasform gegenüber konventionellen Flaschen um 90° verdreht, was erlaubt - bei gegebenem Maschinentyp und Blasformabmessungen - die Zahl der gleichzeitig herstellbaren Blasflaschen zu erhöhen und Materialverdickungen an den Faltstellen zu vermeiden.

Bei einem bevorzugten Ausführungsbeispiel einer Flasche gemäss Fig. 1 mit einem Inhalt von etwa 750 ml beträgt die Gesamthöhe einschliesslich Hals- und Ausgussteil etwa 220 mm, wobei sie eine über die Mantelfaltkanten 15 gemessene grösste Breite von etwa 90 mm und eine Dicke von etwa 60 mm aufweist.

Die Flasche kann infolge ihrer Formgebung auf der Standfläche 4 aufrecht stehen, wobei sie infolge der vergleichsweise geringen Wandstärke von etwa 0,1-1,2 mm im gefüllten Zustand eine leichte Tendenz hat, sich durch Strecken der Einbuchtung 13 unten etwas zu verbreitern, was ihr eine erwünschte gute Standfestigkeit verleiht. Diese Flasche eignet sich zur Präsentation in Verkaufsregalen und kann auch als Nachfüllpackung verwendet werden. Zur Entleerung des Flascheninhaltes wird die Verschlusskappe 7 abgeschraubt und zum Nachfüllen in eine bestehende Flasche od.dgl. wird das im Durchmesser verringerte Ausgussrohr 19 in die nachzufüllende Flasche od.dgl. eingeschoben und her nach der Flascheninhalt umgefüllt.

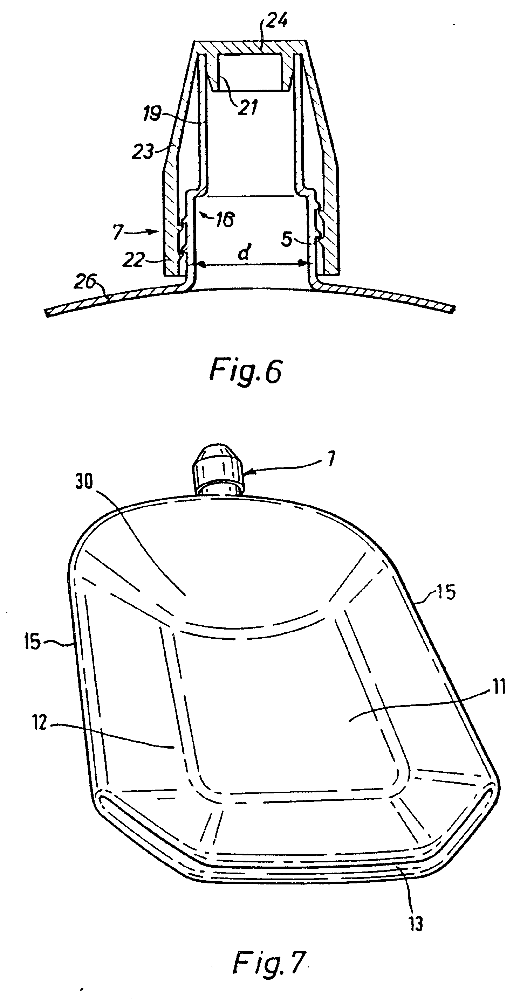

Nach der Entleerung dieser Flasche lässt sie sich infolge ihrer geringen Wandstärke und des flexiblen, vorzugsweise halbsteifen Kunststoffmaterials leicht von Hand zusammenfalten. Dies geschieht dadurch, dass die Flasche auf einen Tisch od.dgl. gelegt und mit der flachen Hand auf den Mantel gedrückt wird. Dadurch wird die V-artige Einbuchtung 13 entlang den vorgeformten Faltkanten 8, 10, 15 flachgedrückt. Dabei werden die beiden zuvor stark gewölbten Bogen 10 etwas gestreckt. Im ausgussnahen Bereich des Flaschenkörpers bilden sich zwei ineinanderliegende Halbschalen 30 mit nahe übereinanderliegenden Wänden, wie dies aus Fig. 7 hervorgeht.

Der im Durchmesser relativ kleine Hals 16 trägt zur guten Ausbildung der Halbschalen 30 nahe am oberen Ende des Flaschenkörpers bei. Damit die zusammengefaltete Flasche sich infolge Rückfederung des elastischen Materials nicht wieder ausdehnen kann, wird die Verschlusskappe 7 auf die leere Flasche dicht aufgeschraubt. Dadurch wird verhindert, dass Luft in die Flasche zurückfliessen und sich diese wieder ausdehnen kann. Im zusammengefalteten Zustand nimmt die Flasche nur einen Bruchteil des Volumens im gefüllten Zustand ein.

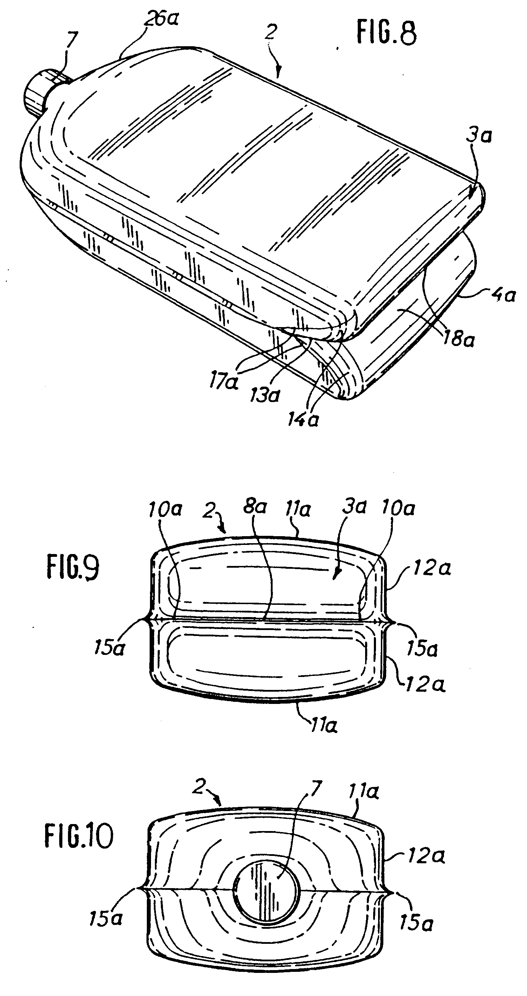

In den Fig. 8-10 ist eine Ausführungsvariante der Flasche dargestellt mit einem gegenüber der Flasche nach den Fig. 1-6 grösseren Fassungsvermögen. Wie aus Fig. 9 hervorgeht, ist die Querschnittsform angenähert rechteckig oder gegebenenfalls quadratisch, wobei die beiden längeren Hauptflächen 11a leicht nach aussen gewölbt sind. An den beiden kürzeren Seitenflächen 12a sind Faltkanten 15a nach aussen vorgeformt in Form je eines etwa dreieckförmigen Ansatzes. Der Bodenteil 3a enthält ebenfalls eine V-förmige Einbuchtung 13a mit konvexen Wänden 18a und einerinnen liegenden Bodenfaltkante 8a, die auf beiden Seiten in Bogen 10a übergeht. Am Uebergang zwischen der Einbuchtung 13a und den Seitenflächen 12a bilden sich ebenfalls Verbindungsfaltkanten 17a, die im nichtgefalteten Zustand gerundet sind, sodass eine Y-Form der Faltkanten entsteht. Die Mantelfaltkante 15a liegt auf dem Grat einer Ausbuchtung und die Bodenfaltkante 8a liegt in der gleichen Flaschen-Längsmittelebene. Der Flaschenoberteil enthält eine Rundung 26a und geht in den Hals über, auf den eine mit Gewinde versehene Verschlusskappe 7 aufgesetzt ist. Das Faltverhalten dieser Flasche entspricht demjenigen, wie es im Zusammenhang mit den Fig. 1-7 beschrieben wurde.

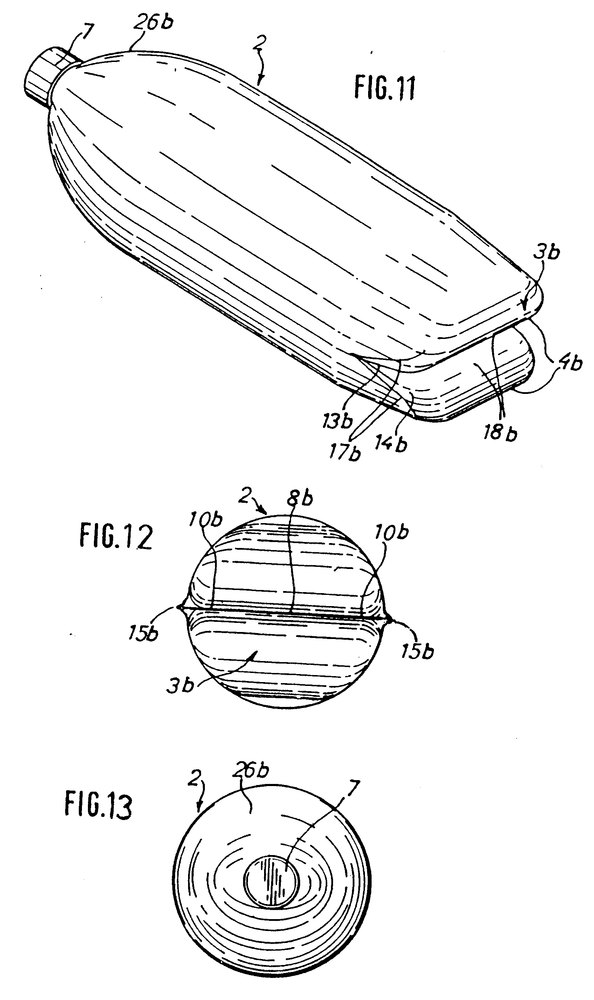

In den Fig. 11-13 ist eine weitere Ausführungsform mit runder Querschnittsform gezeigt. An der Mantelfläche sind Mantelfaltkanten 15b nach aussen vorgeformt in Form eines im Querschnitt etwa dreieckförmigen eine Ausbuchtung bildenden Ansatzes. Der Bodenteil 3b enthält auch hier eine V-förmige Einbuchtung 13b mit konvexen Wänden 18b und einer innen liegenden Bodenfaltkante 8b, die auf beiden Seiten in die Bogen 10b übergehen. Am Uebergang zwischen der Einbuchtung 13b und der Mantelfläche 2 bilden sich Verbindungsfaltkanten 17b, die im nichtgefalteten Zustand gerundet sind, sodass eine Y-Form der Faltkanten entsteht. Die Faltkanten 15b und die Bodenfaltkante 8 liegen in dergleichen Flaschen-Längsmittelebene. Der Flaschenoberteil geht in einer Rundung 26b in den Hals über, auf den eine mit Gewinde versehene Verschlusskappe 7 aufgesetzt ist. Das Faltverhalten dieser im Mittelteil zylindrischen Flasche entspricht demjenigen, wie es im Zusammenhang mit den Fig. 1-7 beschrieben wurde.

Als Material für diese Flaschen eignen sich folgende Kunststoff-Materialien: Polyaethylen, Polypropylen, PVC, Copolymere.

## Patentansprüche

1. Im Blasverfahren hergestellte, faltbare Kusntstoff-Flasche mit einem verschliessbaren Ausgussteil (19) und einer am Boden und an Mantelflächen vorhandenen Falte (8, 15) zur Ermöglichung einer Volumenreduktion bei Ausübung eines auf die Wände von Hand ausgeübten Druckes, wobei der Bodenteil (3,3a,3b) der Flasche eine im Längsschnitt V-artige, eine längliche Bodenfaltkante (8,8a,8b) bildende Einbuchtung (13,13a,13b) aufweist und der Mantel (2) zwei Mantellinien bildende nach aussen gerichtete Mantelfaltkanten (15,15a,15b) aufweist, welche auf den Graten zweier länglicher, sich gegenüberliegender Ausbuchtungen liegen, wobei die Bodenfaltkante (8,8a,8b) in die beiden Mantelfaltkanten (15,15a,15b) übergeht und die Mantelfaltkanten (15,15a,15b) und die Bodenfaltkante (8,8a,8b) in der gleichen Flaschen-Langsmittelebene liegen und wobei zwischen der Mantelfaltkante (15,15a,15b) und der Standfläche (4,4a,4b) beidseitig mit jeweils einer Mantelfaltkante (15,15a,15b) Y-förmig verlaufende, vor der Faltung gerundete Faltkanten (17,17a,17b) vorhanden sind, dadurch gekennzeichnet, dass die V-artige Einbuchtung (13,13a,13b) aus zwei konvexen Flächen (18,18a,18b) gebildet ist, die im Bereich des Bodenteiles (3,3a,3b) je durch eine Rundung (14,14a,14b) in die Mantelfläche (2) übergehen, dass die in ihrem mittleren Teil geradlinige oder leicht gewölbte Bodenfaltkante (8,8a,8b) anschliessend beidseitig in einem Bogen (10,10a,10b) nach oben in die Mantelfaltkanten (15,15a,15b) übergeht und dass die durch die Blasformhälften gebildeten Fugen (9) am Mantel (2) in Flaschenlängsrichtung quer zu der durch die Mantelfaltkanten (15,15a,15b) und die Bodenfaltkante (8,8a,8b) gebildete Flaschenlängsmittelebene verlaufen.

2. Kunststoff-Flasche nach Anspruch 1, dadurch gekennzeichnet, dass die Bodenfaltkante (8,8a,8b) in ihrem mittleren Teil geradlinig oder leicht gewölbt ausgebildet ist und diese anschliessend beidseitig in einem Bogen (10,10a,10b) nach oben in die Mantelfaltkanten (15,15a,15b) übergeht und zwischen der Mantelfaltkante (15,15a,15b) und der Standfläche (4,4a,4b) beidseitig mit jeweils einer Mantelfaltkante (15, 15a,15b) Y-förmig verlaufende, vor der Faltung gerundete Faltkanten (17,17a,17b) vorhanden sind.

3. Kunststoff-Flasche nach Anspruch 1 oder 2, dadurch gekennzeichnet, dass die Flaschenquerschnittsform im mittleren Bereich angenähert sechseckförmig mit ungleichen Seitenlängen ist und die beiden Mantelfaltkanten (15) die Grate von zwei je im Winkel (β) zusammenstossenden Seitenwänden (12) sind und die Standfläche (4) kürzer ist als der Abstand (b) zwischen den beiden Mantelfaltkanten (15).

4. Kunststoff-Flasche nach Anspruche 1 oder 2, dadurch gekennzeichnet, dass die Flaschenquerschnittsform angenähert rechteckig ist und dass die beiden Mantelfaltkanten (15a) die Grate vorgeformter, nach aussen vorstehender Ausbuchtungen sind.

5. Kunststoff-Flasche nach Anspruche 1 oder 2, dadurch gekennzeichnet, dass die Flaschenquerschnittsform rund ist und dass die beiden Mantelfaltkanten (15b) die Grate vorgeformter, nach aussen vorstehender Ausbuchtungen sind.

6. Kunststoff-Flasche nach einem der Ansprüche 1-5, dadurch gekennzeichnet, dass die beiden Mantelfaltkanten (15,15a, 15b) oben bogenförmig in den aus einem Stück bestehenden Hals- und Ausgussteil (16,19) übergehen und die Mantelfläche (2) quer zur besagten Flaschen-Längsmittelebene im obersten Flaschenteil sattelförmig ausgebildet ist.

7. Kunststoff-Flasche nach einem der Ansprüche 1-6, dadurch gekennzeichnet, dass der Hals (16) sich koaxial zur Flaschenlängsmittelachse erstreckt und nahe an seinem an den Flaschenkörper anschliessenden Bereich ein Gewinde (5) enthält und der anschliessende zylindrische Ausgussteil (19) einen kleineren Durchmesser hat, der weniger als ein Viertel, vorzugsweise etwa ein Sechstel der grössten Flaschenausdehnung (b) quer zur Längsmittelachse beträgt.

8. Verfahren zur Volumenverminderung einer leeren Kunststoff-Flasche nach Patentanspruch 1, dadurch gekennzeichnet, dass die Flasche durch Druck von Hand auf ihre Mantelfläche (2) entlang der beiden sich in Flaschenlängsrichtung erstreckenden Mantelfaltlinien (15,15a,15b) und entlang der Bodenfaltlinie (8,8a,8b) der V-artigen, einwärtsragenden Einbuchtung (13,13a,13b) gefaltet wird, wobei im ausgussnahen Bereich der Flasche die nahe übereinanderliegenden Wände angenähert die Form einer Halbschale (30) annehmen und nach dem Faltvorgang zur Verhinderung einer elastischen Rückfederung des Flaschenmaterials der Ausgussteil (19) luftdicht verschlossen wird.

## Claims

1. Collapsible plastic bottle produced by blow moulding, with a sealable pouring part (19) and a fold (8, 15) on the base and the body surfaces in order to facilitate a reduction of the volume upon the exertion of a pressure applied to the walls by hand, whereby the base part (3, 3a, 3b) of the bottle has a V-shaped longitudinal section indentation forming a base fold edge (8, 8a, 8b) and the body (2 ) having two body fold edges (15, 15a, 15b) facing outward and forming body lines, which lie on the crest of two long opposite bulges, whereby the base fold edge (8, 8a, 8b) runs into both body fold edges (15, 15a, 15b) and the base fold edge (8, 8a, 8b) and the body fold edges (15, 15a, 15b) lie in the same bottle longitudinal middle plane and whereby between the body fold edges (15, 15a, 15b) and the standing area (4, 4a, 4b) there are rounded fold edges (17, 17a, 17b), before the fold, on both sides making a Y-shape with each of the body fold edges (15, 15a, 15b),
characterised in the V-shaped indentation (13, 13a, 13b) being made up of two convex areas (18, 18a, 18b), each of which in the base area (3, 3a, 3b), run into the body area (2) through a rounded section (14, 14a, 14b) and base fold edge (8, 8a, 8b) being slightly curved or straight in its middle area, running on both sides into the body fold edges (15, 15a, 15b) via an upward curve (10, 10a, 10b), and the joints (9) made by the blow mould halves on the body (2) in the bottle longitudinal direction running transversely to the bottle longitudinal middle plane made up by the body fold edges (15, 15a, 15b) and the base edge (8, 8a, 8b).

2. Plastic bottle according to Claim 1, characterised in that base fold edge (8, 8a, 8b), slightly curved or straight in its middle area, finally run on both sides into the body fold edges (15,15a, 15b) via an upward curve (10, 10a, 10b), and that between the body fold edges (15, 15a, 15b) and the standing area (4, 4a, 4b) there are, rounded fold edges (17, 17a, 17b), before the fold, on both sides making a Y-shape with each of the body fold edges (15, 15a, 15b),

3. Plastic bottle according to Claim 1 or 2, characterised in that the cross section of the bottle in the central area is approximately six sided with unequal side lengths and that both of the body fold edges (15) are the crest of two side walls (12) each at an angle (β) to each other and that the standing area (4) is shorter than the distance (b) between the two body fold edges (15).

4. Plastic bottle according to Claim 1 or 2, characterised in that the bottle cross section is approximately rectangular and that both of the body fold edges (15a) are the crest of preformed outwardly facing bulges.

5. Plastic bottle according to Claim 1 or 2, characterised in that the bottle cross section is round and that both of the body fold edges (15b) are the crest of preformed outwardly facing bulges.

6. Plastic bottle according to Claims 1-5, characterised in that both of the body fold edges (15, 15a, 15b) are curved at the top running into the neck and pouring part (16, 19) comprised of a single unit and that the cross section of the bottle body (2) in the upper section transverse to the bottle longitudinal middle plane is saddle shaped.

7. Plastic bottle according to Claims 1-6, characterised in that the neck (16) is coaxial with the bottle longitudinal middle axis having a screw thread (5) in the area close to the bottle body and with a final cylindrical pouring part (19) with a smaller diameter which is less than a quarter , preferably about one sixth, of the largest bottle expansion (b) transverse to the longitudinal middle axis.

8. Process for reducing the volume of an empty plastic bottle according to Claim 1, characterised in that the bottle is folded by hand pressure on the surface along both of the body fold lines (15,15a, 15b) in the bottle longitudinal direction and along the base fold line (8, 8a, 8b) of the V-shaped inwardly projecting indentation (13, 13a, 13b), whereby in the area near the pouring part of the bottle the walls lying closely on top of each other almost adopt the shape of a half shell (30) and after the folding stage the pouring part (19) is hermetically closed to stop the elastic spring-back of the bottle material.

## Revendications

1. Bouteille pliable en matière plastique, fabriquée par un procédé de soufflage et comprenant une pièce de déversement (19) pouvant être fermée et un pli (8, 15) présent sur le fond et sur les surfaces latérales pour permettre de réduire le volume en appliquant une pression à la main sur les parois, la partie formant le fond (3, 3a, 3b) de la bouteille comportant une partie en creux (13, 13a, 13b) de coupe longitudinale en V et formant un bord de pliage (8, 8a, 8b) oblong du fond, et la surface latérale (2) comportant deux bords de pliage (15, 15a, 15b) dirigés vers l'extérieur, formant deux génératrices et se trouvant sur les arêtes de deux parties en creux oblongues mutuellement opposées, le bord de plage (8, 8a, 8b) du fond devenant les deux bords de plage (15, 15a, 15b) de la surface latérale et les bords de pliage (15, 15a, 15b) de la surface latérale et les bords de pliage (8, 8a, 8b) du fond se trouvant dans le même plan médian longitudinal de la bouteille, et des bords de plage (17, 17a, 17b), arrondis avant le pliage et formant de part et d'autre un Y avec chacun des bords de pliage (15, 15a, 15b) de la surface latérale étant prévus entre le bord de pliage de la surface latérale (15, 15a, 15b) et la surface d'assise (4, 4a, 4b), caractérisée en ce que la partie en creux (13, 13a, 13b) en V est constituée de deux surfaces (18, 18a, 18b) convexes qui se transforment dans la région de la partie formant le fond (3, 3a, 3b), en la surface latérale (2) par un arrondi (14, 14a, 14b), en ce que la partie centrale du bord de pliage (8, 8a, 8b) du fond rectiligne ou légèrement incurvée se transforme ensuite, de part et d'autre, par un arc (10, 10a, 10b) vers le haut en les bords de pliage (15, 15a, 15b) de la surface latérale et en ce que les lignes de séparation (9) formées par les moitiés du moule de soufflage sur la surface latérale (2) s'étendent dans la direction longitudinale transversalement au plan longitudinal médian de la bouteille formée par les bords de pliage (15, 15a, 15b) de la surface latérale et par le bord de pliage (8, 8a, 8b) du fond.

2. Bouteille en matière plastique suivant la revendication 1, caractérisée en ce que la partie centrale du bord de plage (8, 8a, 8b) du fond est rectiligne ou légèrement incurvée et se transforme ensuite, de part et d'autre, par un arc (10, 10a, 10b) vers le haut en les bords de pliage (15, 15a, 15b) de la surface latérale, et il est prévu, entre le bord de pliage de la surface latérale (15, 15a, 15b) et la surface d'assise (4, 4a, 4b), des bords de pliage (17, 17a, 17b) arrondis avant le plage et formant, de part et d'autre, un Y avec chacun des bords de pliage (15, 15a, 15b) de la surface latérale.

3. Bouteille en matière plastique suivant la revendication 1 ou 2, caractérisée en ce que la section transversale de la partie centrale de la bouteille est sensiblement hexagonale en ayant des côtés inégaux et les deux bords de pliage (15) de la surface latérale sont les arêtes de deux parois latérales (12) faisant entre elles un angle (β) et la surface d'assise (4) est plus courte que la distance (b) entre les deux bords de pliage (15) de la surface latérale.

4. Bouteille en matière plastique suivant la revendication 1 ou 2, caractérisée en ce que la section transversale de la bouteille est sensiblement rectangulaire et les deux bords de pliage (15a) de la surface latérale sont les arêtes de parties creuses préformées en saillie vers l'extérieur.

5. Bouteille en matière plastique suivant la revendication 1 ou 2, caractérisée en ce que la section transversale de la bouteille est de forme circulaire, et en ce que les deux bords de pliage (15b) de la surface latérale sont les arêtes de parties creuses préformées et en saillie vers l'extérieur.

6. Bouteille en matière plastique suivant l'une des revendications 1 à 5, caractérisée en ce que les deux bords de pliage (15, 15a, 15b) de la surface latérale se transforment en haut, en forme d'arc, en la pièce de col et de déversement (16, 19) d'un seul tenant et la surface latérale (2) est en forme de selle transversalement audit plan longitudinal médian de la bouteille dans la partie la plus élevée de celle-ci.

7. Bouteille en matière plastique suivant l'une des revendications 1 à 6, caractérisée en ce que le col (16) s'étend coaxialement à l'axe longitudinal médian de la bouteille et comporte, à proximité de sa partie se raccordant au corps de la bouteille, un filetage (5) et la pièce de déversement (19) cylindrique qui s'y raccorde a un diamètre plus petit qui est inférieur au quart et, de préférence, au sixième environ de la plus grande étendue (b) de la bouteille, transversalement à l'axe longitudinal médian.

8. Procédé pour diminuer le volume d'une bouteille vide en matière plastique suivant la revendication 1, caractérisé en ce qu'il consiste à plier la bouteille, en appliquant une pression à la main sur sa surface latérale (2) le long des deux lignes de pliage (15, 15a, 15b) de la surface latérale s'étendant dans la direction longitudinale de la bouteille et le long de la ligne de pliage (8, 8a, 8b) du fond de la partie creuse (13, 13a, 13b) en forme de V et en saillie vers l'intérieur, les parois presque superposées dans la région de la bouteille proche de la partie de déversement prenant sensiblement la forme d'une hémi-coquille (30) et étant fermées de manière étanche à l'air après le processus de plage pour empêcher tout retour élastique de la matière constituant la partie de déversement (19) de la bouteille.
